Europäisches Patentamt

European Patent Office

Office européen des brevets

(19)

(11) Veröffentlichungsnummer: **0 016 421**
**B1**

(12) **EUROPÄISCHE PATENTSCHRIFT**

(45) Veröffentlichungstag der Patentschrift:
10.11.82

(51) Int. Cl.³: **F 16 B 21/12**, F 16 B 41/00

(21) Anmeldenummer: 80101295.6

(22) Anmeldetag: 13.03.80

(54) Sicherung eines Splintes für Achsen, Wellen, Steckbolzen o. dgl.

(30) Priorität: 14.03.79 DE 2909881

(43) Veröffentlichungstag der Anmeldung:
01.10.80 Patentblatt 80/20

(45) Bekanntmachung des Hinweises auf die Patenterteilung:
10.11.82 Patentblatt 82/45

(84) Benannte Vertragsstaaten:
AT BE CH DE FR GB NL

(56) Entgegenhaltungen:
DD-A-120 074
DE-A-1 925 667
DE-A-2 341 253
DE-A-2 819 624
DE-C-1 196 904

(73) Patentinhaber: Berger, Heinrich, Irscherhof,
D-5520 Bitburg (DE)

(72) Erfinder: Berger, Heinrich, Irscherhof, D-5520 Bitburg
(DE)

(74) Vertreter: Schönherr, Wolfgang et al, Hawstrasse 28,
D-5500 Trier (DE)

Sicherung eines Splintes für Achsen, Wellen, Steckbolzen o.dgl.

Die Erfindung betrifft eine Sicherung eines Splintes für Achsen, Wellen, Stechbolzen o.dgl., insbesondere bei landwirtschaftlichen Geräten, der mit einem auf- und niederklappbaren Federbügel versehen ist, der in Arretierstellung an den Splint herangeklappt ist.

Bei einer bekannten Sicherung eines Vorstekkers (DE-A-2 341 253) weist der Splint eine zu seiner Achse schräg geneigte Rast auf, in die der Federbügel nach dem Niederklappen eingedrückt wird. Ohne Werkzeuge ist das Ein- und Ausrasten des Federbügels jedoch nicht möglich. Ferner ist bekannt (DE-S-1 196 904) einen federnden Stift in dem längsgebohrten Splint so anzuordnen, dass der niedergeklappte Federbügel am Splintende von dem durchgesteckten Stift arretiert wird. Schmutz und Frost behindern jedoch bald die Funktion. Weiter ist bekannt (DE-U-6 904 513) den Splintkörper magnetisch auszubilden und den Federbügel durch Magnetismus nach dem Niederklappen am Splintende zu halten. Eine sichere Arretierung des Federbügels ist aber hiermit ebenfalls nicht gewährleistet. Ferner ist aus der DD-A-120 074 eine Bolzensicherung bekannt bei der zwei schwenkbare Sicherungsteile durch gegenseitiges Verspannen am Herausfallen gehindert werden. Der Erfindung liegt demgegenüber die Aufgabe zugrunde, eine billige und nicht störanfällige Sicherung für einen Splint zu schaffen, die ohne besondere Werkzeuge auch bei Schmutz und Frost eine sichere Arretierung des niedergeklappten Federbügels ergibt.

Die Aufgabe wird nach der Erfindung dadurch gelöst, dass im Abstand zum Federbügel ein weiterer, federnder, auf- und niederklappbarer Sicherheitsbügel angeordnet ist, der in Arretierstellung den Federbügel durch Berührung festhält.

Vorteilhaft sind die Drehachsen von Federbügel und Sicherheitsbügel parallel zueinander angeordnet. Nach einer vorteilhaften Ausführungsform ist der Sicherheitsbügel kleiner als der Federbügel ausgebildet und greift mit seinem von seiner Drehachse abgewandten Ende in den an den Splint herangeklappten Federbügel.

Nach einer anderen Ausführungsform weist der Federbügel an seiner der Drehachse gegenüberliegenden und vom Splint abgewandten Seite ein abgewinkeltes Halteteil auf, in das das freie Ende des Sicherheitsbügels einrastbar ist oder der Sicherheitsbügel weist an seiner der Drehachse gegenüberliegenden Seite ein zum Splint hin abgewinkeltes Halteteil auf, mit dem der Sicherheitsbügel in den Federbügel einrastet.

Die mit der Erfindung erzielten Vorteile bestehen insbesondere darin, dass neben der bekannten Federwirkung des Federbügels in angeklappter Stellung durch ein Gegeneinanderdrücken der beiden Bügel eine zusätzliche Arretierung erfolgt. Erschütterungen, herabfallende Steine, Äste o.dgl. können diese Arretierung nicht lösen. Dabei kann die Aufhebung der Arretierung ohne Werkzeuge und mühelos von Hand durchgeführt werden.

In der Zeichnung sind Ausführungsbeispiele der Erfindung dargestellt. Es zeigen:

Fig. 1 eine Seitenansicht des Splintes mit niedergeklapptem Federbügel und Sicherheitsbügel,

Fig. 2 eine Seitenansicht des Splintes und der beiden Bügel, wobei die Drehachse des Sicherheitsbügels höher als die Drehachse des Federbügels ist,

Fig. 3 eine Seitenansicht des Splintes mit Bügeln, wobei der Federbügel eine Halterung hat,

Fig. 4 eine Seitenansicht des Splintes mit Bügeln, wobei der Sicherheitsbügel eine Halterung hat,

Fig. 5 eine Vorderansicht der Ausführungsform nach Fig. 1.

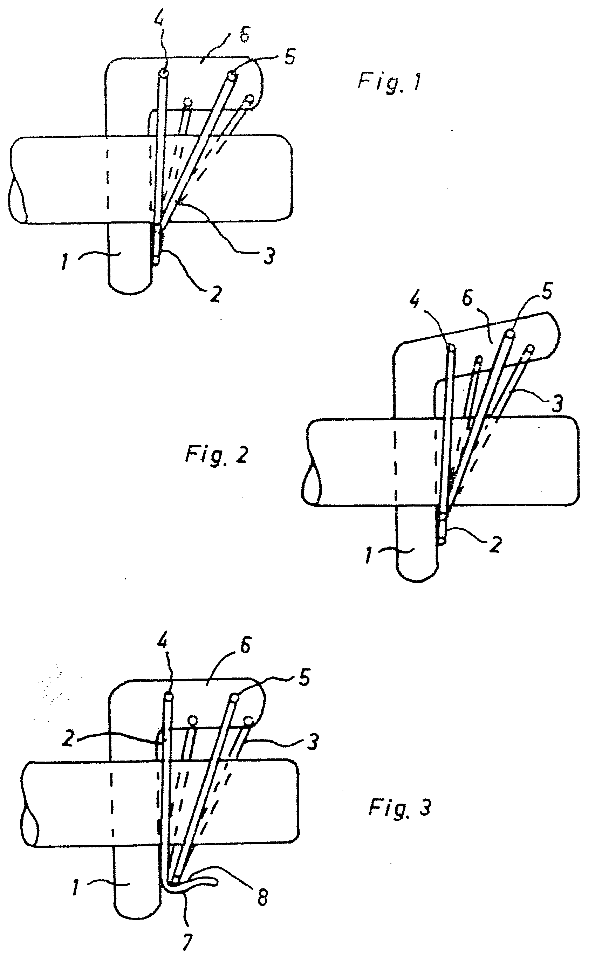

Nach den Fig. 1 bis 5 weist die Sicherung eines Splintes 1 einen auf- und niederklappbaren Federbügel 2 sowie im Abstand einen weiteren, ebenfalls auf- und niederklappbaren, federnden Sicherheitsbügel 3 auf. Der Federbügel 2 sowie der Sicherheitsbügel 3 sind mit ihren zugeordneten Drehachsen 4 bzw. 5 in einer Halterung 6 angeordnet, die mit dem oberen Ende des Splintes 1 fest verbunden ist.

Nach dem Beispiel der Fig. 1 ist der Sicherheitsbügel 3 kleiner als der Federbügel 2 ausgebildet, so dass der Sicherheitsbügel in angeklappter Arretierstellung in den Federbügel greift. Bei der Ausbildungsform nach Fig. 2 sind Federbügel und Sicherheitsbügel gleichgross, jedoch höhenversetzt in der Halterung 6 gelagert, so dass wiederum der Sicherheitsbügel 3 in den Federbügel 2 ragt, wenn beide Bügel an den Splint herangeklappt sind.

Bei der Ausführungsform nach Fig. 3 hat der Federbügel 2 an seiner der Drehachse 4 gegenüberliegenden und vom Splint 1 abgewandten Seite ein abgewinkeltes Halteseil 7 mit einer Rastnase 8, in die das freie Ende des Sicherheitsbügels 3 einrastbar ist.

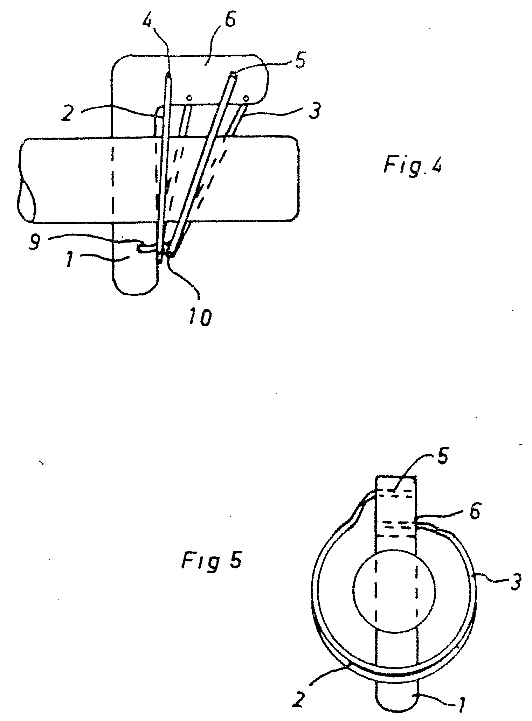

Nach der Ausführungsform der Fig. 4 weist der Sicherheitsbügel 3 an seiner der Drehachse 5 gegenüberliegenden Seite ein zum Splint 1 hin abgewinkeltes Halteteil 9 mit Rastnase 10 auf, mit der der Sicherheitsbügel in den Federbügel 2 einrastet.

In jedem Fall wird durch die im Dreieck angeordnete Stellung von Federbügel 2, Sicherheitsbügel 3 und Halterung 6 eine sichere Arretierung erreicht, die ein ungewolltes Lösen des Splintes 1 verhindert.

**Patentansprüche**

1. Sicherung eines Splintes (1) für Achsen, Wellen, Steckbolzen o.dgl., insbesondere bei landwirtschaftlichen Geräten, der mit einem auf- und niederklappbaren Federbügel (2) versehen ist, der in Arretierstellung an den Splint (1) herangeklappt ist, dadurch gekennzeichnet, dass im Abstand zum Federbügel (2) ein weiterer, federnder, auf-und niederklappbarer Sicherheitsbügel (3) angeordnet ist, der in Arretierstellung den Federbügel durch Berührung festhält.

2. Sicherung nach Anspruch 1, dadurch gekennzeichnet, dass die Drehachsen (4 bzw. 5) von Federbügel (2) und Sicherheitsbügel (3) parallel zueinander angeordnet sind.

3. Sicherung nach Anspruch 1 oder 2, dadurch gekennzeichnet, dass der Sicherheitsbügel (3) kleiner als der Federbügel (2) ausgebildet ist und mit seinem von seiner Drehachse (5) abgewandten Ende in den an den Splint (1) herangeklappten Federbügel greift.

4. Sicherung nach einem der Ansprüche 1 oder 2, dadurch gekennzeichnet, dass die Drehachsen (4, 5) von Federbügel (2) und Sicherheitsbügel (3) höhenversetzt an einer mit dem oberen Ende des Splintes (1) verbundenen Halterung (6) angeordnet sind.

5. Sicherung nach einem der Ansprüche 1 bis 4, dadurch gekennzeichnet, dass der Federbügel (2) an seiner der Drehachse (4) gegenüberliegenden und vom Splint (1) abgewandten Seite ein abgewinkeltes Halteteil aufweist, in das das freie Ende des Sicherheitsbügels (3) einrastbar ist.

6. Sicherung nach einem der Ansprüche 1 bis 4, dadurch gekennzeichnet, dass der Sicherheitsbügel (3) an seiner der Drehachse (5) gegenüberliegenden Seite ein zum Splint (1) hin abgewinkeltes Halteteil aufweist, mit dem der Sicherheitsbügel in den Federbügel (2) einrastet.

**Revendications**

1. Fixation de sécurité pour une goupille (1) d'axe, d'arbre, de goujon ou analogue, notamment pour des machines agricoles, comprenant un étrier à ressorts (2) susceptible d'être relevé et abaissé, placé rabattu contre la goupille (1) en position de verrouillage, et caractérisée en ce qu'on prévoit par ailleurs à distance de l'étrier à ressort (2), un autre étrier de sécurité (3) déformable élastiquement, et qu'on peut rabattre ou relever, a fin de bloquer par contact l'étrier à ressort (2) lorsque celui-ci est en position de verrouillage.

2. Fixation de sécurité suivant la revendication 1, caractérisée en ce que les axes de rotation (4) et (5) de l'étrier à ressort (2) et de l'étrier de sécurité (3) sont parallèles entre eux.

3. Fixation de sécurité suivant l'une quelconque des revendications 1 et 2, caractérisée en ce que l'étrier de sécurité (3) est plus petit que l'étrier à ressort (2), tandis que son extrémité voisine de son axe de rotation (5) s'engage dans l'étrier à ressort (2) quand celui-ci est rabattu contre la goupille (1).

4. Fixation de sécurité suivant l'une quelconque des revendications 1 et 2, caractérisée en ce que les axes de rotation (4) et (5) de l'étrier à ressort (2) et de l'étrier de sécurité (3) sont disposés avec un décalage de hauteurs sur un support (6) lié à l'extrémité supérieure de la goupille (1).

5. Fixation de sécurité suivant l'une quelconque des revendications 1 à 4, caractérisée en ce que l'étrier à ressort (2) comporte, sur son côté qui fait face à l'axe de rotation (4) et qui est opposé à la goupille (1), une pièce de support dans laquelle peut être engagée l'extrémité libre de l'étrier de sécurité (3).

6. Fixation de sécurité suivant l'une quelconque des revendications 1 à 4, caractérisée en ce que l'étrier de sécurité (3) comporte, sur son côté situé face à l'axe de rotation (4), une pièce de support coudée en direction de la goupille (1) et grâce à laquelle l'étrier de sécurité (3) s'engage dans l'étrier à ressort (2).

**Claims**

1. A split-pin securing device (1) for axes, shafts, socket pins or the like, particularly for agricultural implements, which is provided with a spring U-bolt (2) which can be swung up and down and which, in the locking position, is swung close up to the split-pin (1), characterised in that located at a spacing from the spring U-bolt (2) is a further, resilient, safety U-bolt (3) which can be swung up and down and which, in the locking position, restrains the spring U-bolt by contact.

2. A split-pin securing device as claimed in claim 1, characterised in that the axes of rotation (4 and 5 respectively) of the spring U-bolt (2) and the safety U-bolt (3) are arranged parallel to one another.

3. A split-pin securing device as claimed in claim 1 or 2, characterised in that the safety U-bolt (3) ist smaller than the spring U-bolt (2) and, with its end remote from its axis of rotation (5), engages into the spring U-bolt swung close up to the split-pin (1).

4. A split-pin securing device as claimed in claim 1 or 2, characterised in that the axes of rotation (4, 5) of the spring U-bolt (2) and the safety U-bolt (3) are arranged offset in height on a holder (6) connected to the upper end of the split-pin (1).

5. A split-pin securing device as claimed in one of claims 1 to 4, characterised in that the spring U-bolt (2) is provided with a projecting holding means on the side facing its axis of rotation (4) and turned away from the split-pin (1), into which holding means the free end of the safety U-bolt (3) can be snapped in.

6. A split-pin securing device as claimed in one of claims 1 to 4, characterised in that the safety U-bolt (3) is provided with a holding means on the side facing its axis of rotation (5) and projecting towards the split-pin (2) by means of which holding means the safety U-bolt snaps into the spring U-bolt (2).

*Fig. 1*

*Fig. 2*

*Fig. 3*

Fig.4

Fig 5